# EUROPEAN PATENT SPECIFICATION

(11) **EP 2 911 766 B1**
(45) Date of publication and mention of the grant of the patent: **01.04.2020**
(21) Application number: 12887168.8
(22) Date of filing: 26.10.2012
(51) Int. Cl.: B01D 50/00, B01D 46/00, B01D 46/12

(54) **DUST COLLECTORS AND METHODS**
STAUBFÄNGER UND VERFAHREN
COLLECTEURS DE POUSSIÈRE, ET PROCÉDÉS ASSOCIÉS

(43) Date of publication of application: 02.09.2015
(73) Proprietor: Donaldson Company, Inc., Minneapolis, MN 55440-1299 (US)
(72) Inventor: RENWART, Dominique, B-3320 Hoegaarden (BE); COLLIN, Eric, B-3110 Rotselaar (BE); DEBRIE, Helmut, B-3500 Hasselt (BE); FEYTONS, Xander, Minneapolis, Minnesota 55440-1299 (US); WOUTER, Sas, B-3012 Wilsele (BE)
(74) Representative: Sutto, Luca
(86) International application number: PCT/US2012/062187
(87) International publication number: WO 2014/065821

(56) References cited:
- EP-A1- 0 295 213
- US-A- 3 423 908
- US-A- 4 272 262
- US-A1- 2002 020 160
- US-A1- 2005 045 552
- US-A1- 2005 235 618
- US-A1- 2007 084 167
- US-A1- 2007 084 167
- US-A1- 2011 083 408
- US-A1- 2011 083 408
- US-B1- 6 368 388

## Description

Sliding filter cartridges, dust collectors using the cartridges, and related methods are described herein.

Dust collectors are used, e.g., to clean particulate matter from air flow streams. One embodiment of dust collectors includes bag house filters. Bag house filters include a housing, a dirty air inlet, a clean air outlet, and a tubesheet having a plurality of apertures. The tubesheet separates the housing between a dirty air side and a clean air side and holds the filter bags. The bags are made of a filter media so that as dirty air flows from the dirty air side to the clean air side, the air must flow through the bags, and the filter media of the bags prevents particulate matter from reaching the clean air side.

Another embodiment of dust collectors that is known includes the use of filter cartridges having pleated media. The filter cartridges are held by a tubesheet, and the air must flow through the pleated media of the filter cartridges from the dirty air side to the clean air side.

US 2002/0020160 discloses a cartridge dust collector for maximizing the filtration of the air and removal of the pollutants and contaminants from the air stream. The cartridge dust collector comprises a housing having an air inlet, an air outlet, and a transverse wall, the housing further comprising a chamber. Conical shaped dust collector cartridges are mounted in the chamber between the air inlet and the air outlet with each dust collector cartridge in alignment with an access opening in a side wall of the housing. Spaced apart slide rails are provided in the housing in alignment with each access opening. The dust collector cartridges comprise a conical shaped media pack and a head plate secured to the upper end. Each head plate is carried on the slide rails, with the slide rails being spaced apart sufficiently to receive the media pack there between. Interlocking means are provided on adjacent head plates so that the cartridges can be assembled and removed from the housing in groups, rather than individually. The cartridge dust collector further comprises a cammed locking means for securing each cartridge in place and for sealing the top of each dust collector cartridge with respect to the transverse wall.

US 201110083408 discloses an air filter cartridge which has Z-media and a gasket arrangement with a perimeter gasket member against the downstream flow face and a side gasket member adjacent to at least a partial extension of a first side panel. The side gasket member includes no portion against second, third, and fourth side panels of the air filter cartridge. The air filter cartridge can be used in a dust collector having a tubesheet and a frame arrangement extending from the tubesheet. The perimeter gasket member seals against the frame arrangement and the side gasket member seals against the tubesheet. A method of servicing includes orienting the air filter cartridge against a guide ramp and moving the filter cartridge until the side gasket member is engaged against the tubesheet sealing surface.

Both US 2002/0020160 and US 201110083408 are silent with respect to a tubesheet structure including an upper wall and lower walls, as well as a plurality of apertures formed through the lower walls of the tubesheet structure, and a filter cartridge frame structure configured to retain first and second filter cartridges over first and second apertures.

### SUMMARY

Sliding filter cartridges, dust collectors using the sliding filter cartridges, and methods of servicing the dust collectors are described herein.

In one or more examples of the dust collectors and the filter cartridges described herein, replacement of two or more aligned filter cartridges can be accomplished from one side of the dust collector. As a result, the dust collectors can be designed to provide access to the filter cartridges from only one side of the collector, rather than from two or more sides. To provide that functionality, the filter cartridges have rail assemblies that slide within an alignment channel in a filter support bar in the dust collector. By connecting the filter cartridges to each other, movement of one filter cartridge, e.g., the one closest to an access opening, moves the other connected filter cartridges within the dust collector. As a result, removing one filter cartridge from the interior of the dust collector moves the connected filter cartridges closer to the access opening so that they can also be removed from the same side of the dust collector.

Another feature of the dust collectors and filter cartridges described herein is the use of gaskets to provide a seal between the filter cartridges and the tubesheet around each aperture in the tubesheet separating the dust collector into a dirty air plenum and a clean air plenum. The gaskets can be extended to form a seal when the filter cartridges are in position over the apertures in the tubesheet, but can be retracted so that the filter cartridges can slide through the dust collector without the interference that the gaskets would provide if they were in their extended positions.

According to a first aspect of the invention, a dust collector having the features of claim 1 is provided.

In one or more embodiments of the dust collectors described herein, the rail assembly of the first filter cartridge comprises a first end and a second end, wherein the rail assembly of the second filter cartridge comprises a first end and a second end, and wherein the connection comprises a mechanical interlock between the second end of the rail assembly of the first filter cartridge and the first end of the rail assembly of the second filter cartridge.

In one or more examples of the dust collectors described herein, the connection between the rail assembly of the first filter cartridge and the rail assembly of the second filter cartridge is achieved without the use of tools.

In one or more embodiments of the dust collectors described herein, the alignment channel comprises a T-shaped channel in a cross-section taken transverse to the first axis.

In one or more embodiments of the dust collectors described herein, the first filter cartridge and the second filter cartridge are suspended from the alignment channel by their rail assemblies.

In one or more embodiments of the dust collectors described herein, the first axis defines an X-axis, and wherein the alignment channel restricts movement of the rail assemblies along a Y-axis and a Z-axis relative to the X-axis.

In the dust collectors according to the invention, the first gasket and the second gasket both comprise an extended position and a retracted position, wherein the first gasket and the second gasket both comprise a seal surface that is positioned farther away from the tube sheet when the gasket is in the extended position than when the gasket is in the retracted position. In one or more embodiments, the first gasket and the second gasket comprise expandable gaskets, e.g., inflatable gaskets.

In a second aspect of the invention, a method of servicing a dust collector as claimed in claim 1 is disclosed, such method having the features of claim 9.

In one or more embodiments of methods of servicing dust collectors as described herein, disconnecting the rail assembly of the first filter cartridge from the rail assembly of the second filter cartridge is performed after removing the rail assembly of the first filter cartridge from the alignment channel.

In one or more embodiments of methods of servicing dust collectors as described herein, connecting the rail assembly of the fourth filter cartridge to the rail assembly of the third filter cartridge is performed before inserting the rail assembly of the fourth filter cartridge into the alignment channel.

In one or more embodiments of methods of servicing dust collectors as described herein, the alignment channel extends along an X-axis, and wherein the alignment channel restricts movement of the rail assemblies along a Y-axis and a Z-axis relative to the X-axis.

In the method according to the invention, the first filter cartridge is positioned over a first aperture in a tubesheet located in the housing with a first gasket forming a seal between the tubesheet and the first filter cartridge such that air passing through the first aperture passes through the first filter cartridge, and the second filter cartridge is positioned over a second aperture in the tubesheet with a second gasket forming a seal between the tubesheet and the second filter cartridge such that air passing through the second aperture passes through the second filter cartridge, the method further comprising retracting the first gasket from an extended position to a retracted position before removing the first filter cartridge from the housing. The method further includes retracting the second gasket from an extended position to a retracted position before removing the second filter cartridge from the housing.

A seal may be formed between the tubesheet and the fourth filter cartridge such that air passing through the first aperture passes through the fourth filter cartridge, wherein forming the seal comprises extending the first gasket to the extended position from the retracted position after placing the fourth filter cartridge in the housing.

In an example, a plurality of filter cartridges comprising a first filter cartridge and a second filter cartridge may include a first filter cartridge and a second filter cartridge that each comprise: a media pack configured to remove particles from air passing through the media pack, wherein the media pack comprises an upstream flow face and a downstream flow face, wherein the upstream flow face and the downstream flow face are on opposite sides of the media pack; panels forming a frame that extends from the upstream flow face to the downstream flow face around a perimeter of the media pack; a rail assembly extending from at least one of the panels, wherein the rail assembly comprises a rail comprising a first end and a second end, wherein the rail extends along an X-axis between the first end and the second end, and wherein the rail extends away from the media pack along a Z-axis, and wherein the rail assembly is shaped such that when the rail assembly is located in a complementary-shaped channel that extends along the X-axis, movement of the rail assembly along the X-axis within the alignment channel is allowed while movement of the rail assembly along a Y-axis or the Z-axis is restricted by the channel; and a mechanical interlock configured to connect the first end of the rail of the first filter cartridge to the second end of the rail of the second filter cartridge.

In one or more examples, the rail assembly comprises one or more tabs that extend outwardly away from the rail along a Y-axis, and wherein the rail and the tabs form a T-shaped rail assembly when viewed along the X-axis.

In one or more examples, the rail assembly comprises an L-shaped rail assembly when viewed along the X-axis.

In one or more examples, the rail assembly comprises a J-shaped rail assembly when viewed along the X-axis.

In one or more examples, the rail assembly of the first filter cartridge comprises a hook proximate the first end of the rail, and wherein the rail assembly of the second filter cartridge comprises a slot proximate the second end of the rail, and further wherein the hook is configured to fit within the slot such that movement of the first filter cartridge along the X-axis away from the second filter cartridge pulls the second filter cartridge along the X-axis with the first filter cartridge.

In one or more examples, the mechanical interlock between the rail assembly of the first filter cartridge and the rail assembly of the second filter cartridge is achieved without the use of tools.

The above summary is not intended to describe each embodiment or every implementation of the dust collectors using the cartridges, and methods of using the cartridges described herein. Rather, a more complete understanding of the invention will become apparent and appreciated by reference to the following Description of Illustrative Embodiments and claims in view of the accompanying figures of the drawing.

### BRIEF DESCRIPTIONS OF THE VIEWS OF THE DRAWING

FIG. 1 is a front perspective view of one illustrative embodiment of a dust collector as described herein.
FIG. 2 is a front perspective view of the dust collector of FIG. 1, with portions of the housing removed to expose the interiors of the dirty air plenum and the clean air plenum.
FIG. 3 is a side view of the dust collector of FIG. 1 (taken from the right side of the dust collector as depicted in FIG. 1), with portions of the housing removed to expose the interiors of the dirty air plenum and the clean air plenum.
FIG. 4 is a front elevation view of the dust collector of FIG. 1, with portions of the housing removed to expose the interiors of the dirty air plenum and the clean air plenum.
FIG. 5 is an enlarged cross-sectional view depicted illustrative embodiments of the connection between a rail assembly on a filter cartridge and a filter support bar and of a seal formed between a gasket in an extended position and the filter cartridge.
FIG. 6 is a cross-sectional view of the interface between a filter cartridge and gasket of FIG. 5 when the gasket is in a retracted position.
FIG. 7 is a plan view of a portion of a tubesheet used in the dust collectors described herein depicting gaskets surrounding the apertures in the tubesheet and the arrangement between the apertures and the axis defined by the alignment channel in the filter support bars as described herein.
FIG. 8 is a perspective view of a filter cartridge as described herein.
FIG. 9 is another perspective view of the filter cartridge of FIG. 8.
FIG. 10 is a front elevation view of the filter cartridge of FIG. 8.
FIG. 11 is a side elevation view of the filter cartridge of FIG. 8 with arrows depicting the direction of flow through the filter cartridge in the illustrative embodiments of the dust collectors described herein.
FIG. 12 is an enlarged side view of the filter cartridge of FIGS. 8-11 depicting one illustrative embodiment of a rail assembly on the filter cartridge.
FIGS. 13A and 13B are cross-sectional views of some alternatively shaped alignment slots and rail assemblies that can be used in the dust collectors and filter cartridges described herein.

### DESCRIPTION OF ILLUSTRATIVE EMBODIMENTS

In the following description of illustrative embodiments, reference is made to the accompanying figures of the drawing which form a part hereof, and in which are shown, by way of illustration, specific embodiments. It is to be understood that other embodiments may be utilized and structural changes may be made.

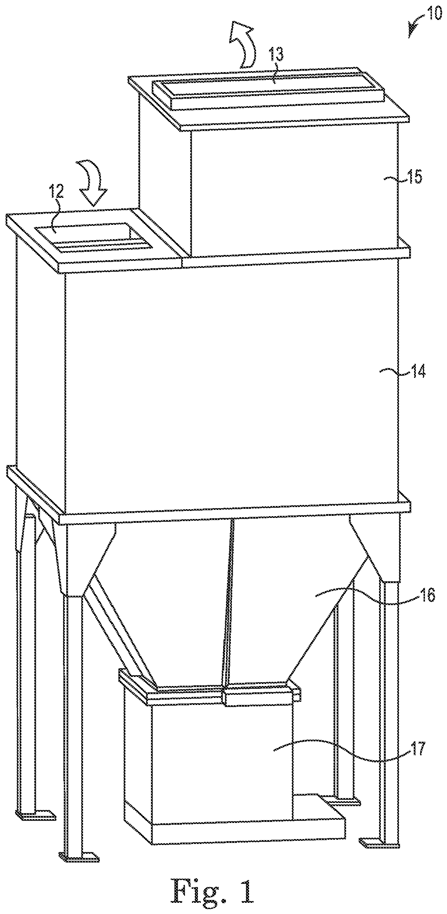

An example of a dust collector 10 as described herein is depicted in FIGS. 1-7. The dust collector 10 uses filter cartridges of the type described herein to filter air. For example, the dust collector 10 can be used for cleaning dust and other types of particulate from the air. In general, the dust collector 10 includes a housing made from sheet metal or other types of materials that are impermeable to air moving through the dust collector 10 .

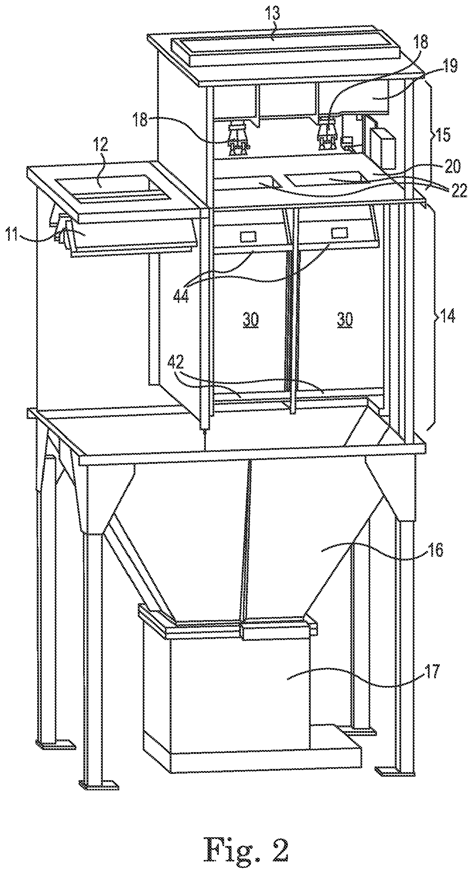

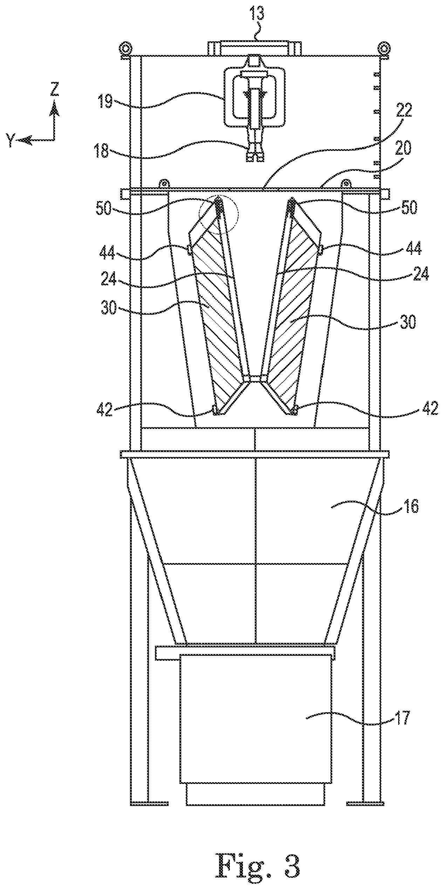

The dust collector 10 has an unfiltered or dirty air inlet 12 and a filtered or clean air outlet 15. In general, unfiltered air enters the dust collector 10 through the dirty air inlet 12. Air filter cartridges 30 (see, e.g., FIGS. 2 and 3) within the dust collector 10 remove dust and other particulate from the air. The dust collected from dirty air flowing through the dust collector 10 falls into the hopper 16 and is collected in the dust bin 17 from which it is removed from the dust collector 10 The clean, filtered air is exhausted from the dust collector 10 through the clean air outlet 13. The depicted dust collector includes baffles 11 that may be used to redirect dirty air entering the dust collector 10 to distribute it and/or to reduce its velocity so that, in some circumstances, some of the dust contained in the dirty air may fall into the hopper 16 and dust bin 17 before reaching the filter cartridges 30.

The dust collector 10 includes a tubesheet that separates the interior volume of the dust collector 10 between an unfiltered or dirty air plenum 14 and a filtered or clean air plenum 15. The tubesheet in the depicted dust collector 10 includes multiple components (in contrast to tubesheets in some dust collectors that may be flat sheets with apertures formed therein). The tubesheet in the depicted dust collector 10 includes an upper wall 20 that includes two apertures 22. The tubesheet structure in the dust collector 10 also includes lower walls 24 that extend downward into the volume that is otherwise occupied by the dirty air plenum 14 and against which filter cartridges 30 are located. In other words, the tubesheet structure (including upper wall 20 and lower walls 24) separates the dirty air plenum 14 from the clean air plenum 15 in a manner similar to conventional tubesheets.

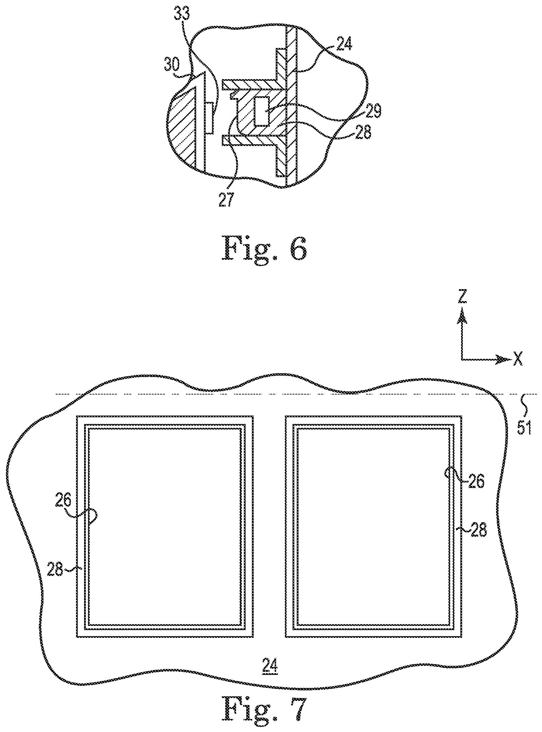

A plan view of one of the lower walls 24 is depicted outside of the dust collector 10 in FIG. 7. The lower wall 24 includes a pair of apertures 26 over which a filter cartridge 30 is positioned during use of the dust collector 10. As will be described herein, each of the apertures 26 in the lower wall 24 is surrounded by a gasket 28 that is positioned between the filter cartridge 30 and the lower wall 24 of the tubesheet when a filter cartridge is positioned over the aperture 26.

Although the upper wall 20 of the tubesheet in the embodiment includes two apertures 22, in one or more embodiments, the upper wall 20 of the tubesheet may include as few as one aperture or more than two apertures depending on the need to move air from the portion of the clean air plenum 15 located between the lower walls 24 of the tubesheet while providing sufficient structural integrity to the overall design.

In the depicted dust collector 10, two lower walls 24 are used to provide locations for two pairs of filter cartridges 30 positioned in the opposing arrangement seen from one end in, e.g., FIG. 3. It should be understood, however, that the in other embodiments, the dust collector 10 may include a tubesheet structure that includes only one wall that provides positions for only one pair of filter cartridges 30. Further, although the filter cartridges 30 are depicted as being provided in pairs on each of the lower walls 24 of the tubesheet structure, in one or more embodiments, three or more filter cartridges may be aligned along the same wall within the dust collector 10.

The illustrative embodiment of the dust collector 10 also includes a reverse pulse cleaning system that is constructed and arranged to emit a pulse of air from the clean air plenum 15, through the downstream flow faces of each of the air filter cartridges 30 (where the downstream flow face is the surface of the filter cartridge that faces the clean air plenum 15). By pulsing air from the clean air side through the downstream flow faces, at least a portion of the dust and other debris clogging the upstream flow faces of the air filter cartridges 30 may be dislodged and knocked loose from the air filter cartridge 30. From there, the dislodged dust and debris falls by gravity into the dust collection hopper 16 and, eventually, into the collection bin 17 located below the arrangement of cartridges 30.

The depicted embodiment of the reverse pulse cleaning system includes, preferably, at least one nozzle 18 for each aperture 22 in the upper wall 20 of the tubesheet. The nozzles 18 are in air flow communication with a manifold 19 which is connected to a source of pressurized air. The reverse pulse cleaning system periodically sends a pulse of air through the manifold 19 to the nozzles 18. The pulse of air leaves each nozzle 18 and flows through the apertures 22. From there, the air flows in a reverse direction through the normal direction of air flow through the air filter cartridges 30 (where the normal direction is the direction of air flow during the filtering process). In one or more embodiments, the reverse pulse cleaning system may include one or more venturis (not shown) to help direct the pulses of air from the nozzles 18 into downstream flow faces of the filter cartridges 30 of the dust collector. Further, the fluid paths between the nozzles 18 and the filter cartridges 30 may include separator walls and other structures to assist in operation of the reverse pulse cleaning system as described in, e.g., U.S. Patent Application Publication US 2011/0083408 (Raether et al.).

The depicted embodiment of the dust collector 10 also includes a filter cartridge frame structure that is configured to retain the filter cartridges in place over the apertures 26 in the tubesheet. In the depicted embodiment, the frame structure includes lower members 42 and upper members 44 (see, e.g., FIG. 2) positioned on the upstream flow faces of the filter cartridges 30 (where the upstream flow faces are the surfaces of the filter cartridges 30 that face away from the lower wall 24 of the tubesheet).

The frame structure in the depicted embodiment of the dust collector 10 also includes a pair of channel bars 50 as seen in, e.g., FIGS. 3-5. Each of the lower walls 24 includes a channel bar 50 located proximate the pair of apertures 26 formed in the lower wall 24 of the tubesheet. Each channel bar 50 defines an alignment channel 52 that extends along a first axis 51 within the dust collector 10. The alignment channel 52 is configured to receive and retain a rail assembly 60 of each of the filter cartridges 30 located over the apertures 26 in the lower wall 24 of the tubesheet. The rail assemblies 60 and alignment channels 52 are configured to allow movement of the rail assemblies 60 and their respective filter cartridges 30 into and out of the dust collector 10 in directions aligned with the first axis 51 as will be described in more detail below in connection with the filter cartridges.

In the depicted embodiment, the alignment channel 52 of the channel bar 50 is formed using a housing 53 in which profile bars 54 are retained. The profile bars 54 may, in one or embodiments, be made of a material that provides a low coefficient of friction and that repels dust such that the channel 52 does not become filled with dust particles in a manner that would unduly limit movement of the rail assemblies 60 through the alignment channel 52. Although two profile bars 54 are used in the depicted embodiment, in one or more other embodiments, the alignment channel 52 could be formed in a single piece unitary profile bar that was, e.g., extruded or otherwise formed in the desired shape.

In addition to retaining the filter cartridges in place over the apertures 26 of the tubesheet, the filter cartridge frame structure (e.g., lower members 42 and upper members 44) also provides, in one or more embodiments, a structure that assists in the formation of a seal between each of the filter cartridges 30 and the gaskets 28 that surround the perimeter of each of the apertures 26. The gaskets 28 used in one or more embodiments of the dust collectors described herein have both an extended position and a retracted position. The seal surface 27 of each gasket 28 is positioned farther away from the lower wall 24 of the tubesheet when the gasket 28 is in the extended position than when the gasket 28 is in the retracted position.

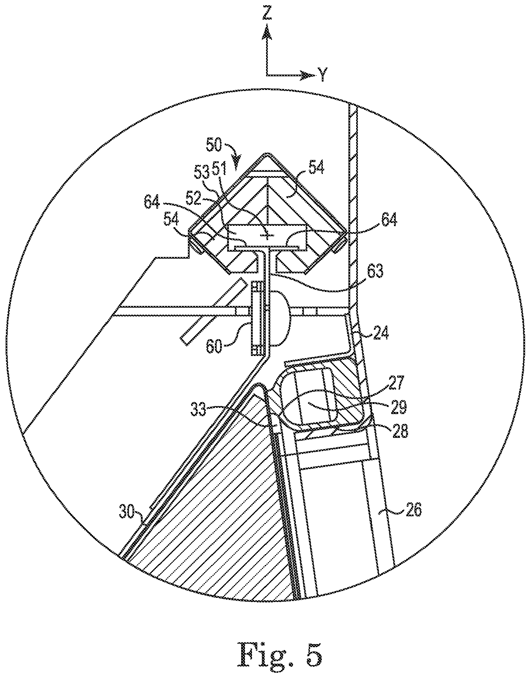

As seen in the embodiment depicted in FIG. 5, in the extended position, a seal surface 27 of each of the gaskets 28 contacts a seal surface 33 on a filter cartridge 30 with sufficient force and in a continuous manner around the perimeter of the downstream face 32 of the filter cartridge 30 such that air moving through the aperture 26 (from the dirty air plenum 14 to the clean air plenum 15) surrounded by the gasket 28 passes through the filter media in the filter cartridge 30 rather than around the filter cartridge 30. The sealing force is generated between the seal surface 27 of the gasket 28 and the seal surface 33 of the filter cartridge 30 because the filter cartridge frame structure acts as a mechanical stop against which the filter cartridge 30 is forced when the gasket 28 is in its extended position. Further, the seal surface 27 of the gasket 28 and the seal surface 33 of the filter cartridge 30 may be constructed of materials that facilitate the formation of an adequate seal, e.g., materials that may be flexible, elastomeric, compressible, etc. such as, e.g., urethane, polyurethane, foam, polymer, rubber, silicone, or other suitable materials.

Referring to FIG. 6, the gasket 28 is depicted in its retracted position in which the seal surface 27 of the gasket 28 is not in closer to the lower wall 24 of the tubesheet and, as a result, is not in contact with the seal surface 33 of the filter cartridge 30 in the depicted embodiment. In one or more embodiments, the gasket 28 may still be in contact with at least a portion of the seal surface 33 when in the retracted position, but not with a force that is sufficient to prevent air from passing between the gasket 28 and the seal surface 33 of the filter cartridge 30 (as when the gasket 28 is in the extended position, e.g., as depicted in FIG. 5).

Movement of the gaskets 28 between their extended positions and their retracted positions may be achieved using any of one or more different techniques. In one or more embodiments, the gaskets may be described as expandable, with the expansion being caused by, e.g., mechanical structures (e.g., springs, etc.), electromechanical structures (e.g., opposing magnetic structures, etc.), etc. In one or more embodiments, the gaskets 28 may exert a force on the filter cartridge that assists in clamping or holding the filter cartridge 30 in a selected position within the dust collector 10 in addition to forming an air-tight seal as described herein.

In one or more embodiments, the expandable gaskets 28 may include, e.g., a chamber 29 that can be inflated to move the seal surface 27 to the extended position (see FIG. 5) or deflated such that the gasket 28 is in a retracted position such that a seal is not formed (with, e.g., the chamber 29 being deflated as seen in FIG. 6relative to the inflated chamber 29 seen in FIG. 5). The chamber 29 may be inflated with air or any other suitable fluid (liquid and/or gas). Further, although depicted as a unitary structure, the gasket 28 may be constructed in two or more components including separate and distinct bladder and seal elements, with inflation/deflation of the bladder extending/retracting the separate seal element.

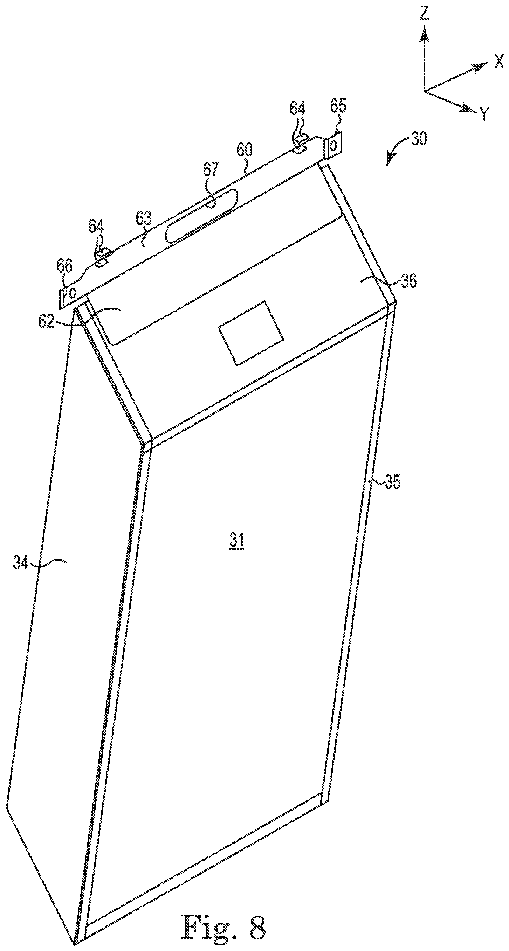

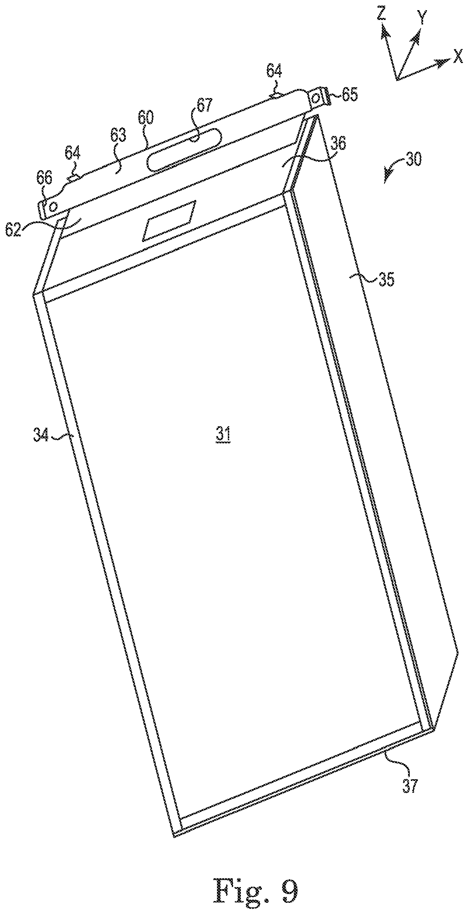

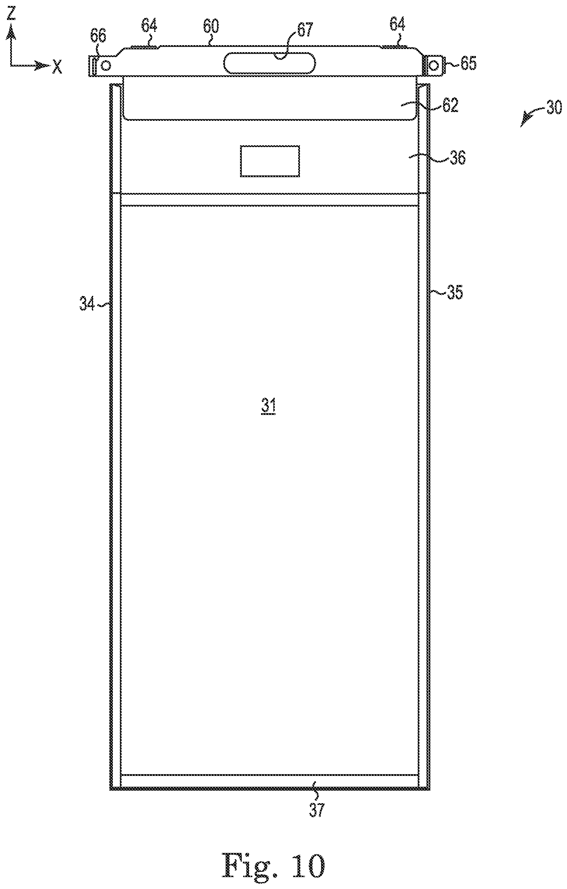

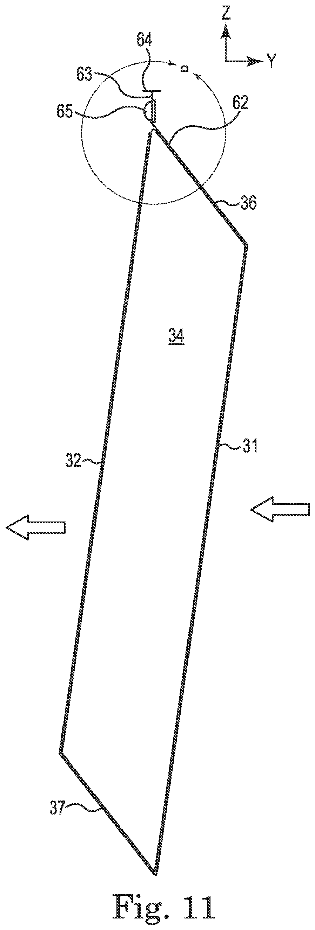

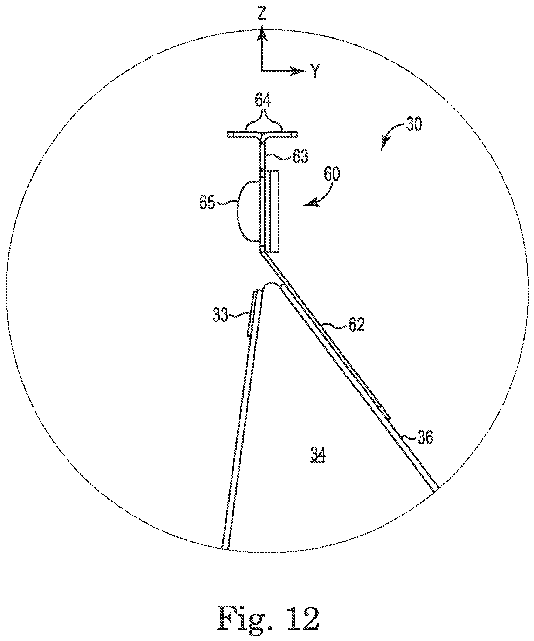

The components and features of the dust collectors described herein are designed for use with filter cartridges that can be removed and cleaned or replaced when they have reached the end of their service life in the collector. One or more illustrative embodiments of filter cartridges that can be used in the dust collectors are described below in connection with FIGS. 8-12.

The depicted example of air filter cartridge 30 includes a media pack having an upstream flow face 31 and an opposite downstream flow face 32. In the depicted embodiment, the upstream flow face 31 and the downstream flow face 32 are generally flat, planar, and parallel to each other, but these features are not required.

The air filter cartridge 30 depicted in FIGS. 8-12 also includes a first side panel 34 and a second side panel 35 located on an opposite sides of the air filter cartridge 30. In addition, the filter cartridge 30 also includes a first end panel 36 and a second end panel 37 that, together with first side panel 34 and second side panel 35 form a frame around the media pack of the filter cartridge 30. The side and end panels may be constructed of any suitable material or materials, e.g., plastic, metal, etc. and the media pack may be retained within the side and end panels in a manner that prevents air from passing between the end panels and the media pack such that it is not filtered when moving through the filter cartridge 30 from the upstream face 31 to the downstream face 32.

In one or more examples, the seal surface 33 on the filter cartridge 30 may be constructed of material that assists with the formation of a seal between the gaskets 28 in the dust collectors 10 and the filter cartridges 30. For example, the seal surface 33 may be formed by compressible materials such as, e.g., polyurethane, foamed polyurethane, rubber, silicone, etc.

Specific construction details with respect to the filter cartridges described herein may vary. Examples of some potential suitable filter cartridge constructions including, e.g., media packs and frames/structures containing the media packs may be found in one or more of the following documents: U.S. Patent Nos. 4,925,561; 5,049,326; 5,562,825; 5,613,992; 5,772,883; 5,792,247; 5,820,646; 5,895,574; 5,902,364; 6,039,778; 6,179,890; 6,190,432; 6,210,469; 6,235,195; 6,350,296; 6,673,136; 7,282,075; 7,959,702; Des. 396,098; Des. 398,046; Des. 399,944; Des. 428,128; and Des. 437,401; International Publications WO 1997/040918; WO 2004/007054; WO 2004/082795; and US Patent Application Publications US 2006/0091084; US 2010/0078379; and US 2009/0127211.

The filter cartridges described herein also include a rail assembly 60 that is configured to be used in conjunction with the alignment channel that forms a part of the filter cartridge frame structure. The rail assembly 60, when used in conjunction with the filter support bar 50 and its alignment channel 52 can provide a system that facilitates removal and replacement of filter cartridges in dust collectors as described herein.

In the filter cartridges depicted in FIGS. 8-12, the rail assembly 60 is provided as an attachment to the filter cartridge 30, i.e., it is attached to one of the panels that frames the media pack of the filter cartridge 30. In one or more other embodiments, the rail assembly may, however, be integrated into one or more of the panels that frame the media pack.

It may be helpful to describe the rail assembly 60 and its features, as well as the alignment channel 52 in terms of an orthogonal coordinate system. With reference to FIGS. 8-12, each of which include a legend indicating the X, Y, and/or Z axes as appropriate for the view, as well as FIG. 5 which also includes a legend indicative of the orientation of the orthogonal coordinate system depicted in FIGS. 8-12.

The rail assembly 60 includes a base 62 that is, in the depicted embodiment, attached to end panel 36 of the filter cartridge 30. A rail 63 extends away from the base 62 and, in the depicted embodiments, extends along the Z-axis. A handle 67 may be provided in the rail 63 to facilitate handling of the filter cartridge 30.

The rail 63 provides for spacing along the Z-axis between the end of the panel 36 and the tabs 64 that extend outwardly away from the rail 63 in opposite directions along the Y-axis. The combined shape of the rail 63 and the tabs 64 is complementary to the shape of the alignment channel 52 such that the rail assembly 60 can fit within and move through the channel 52 along the X-axis (which is aligned with the axis 51 described in connection with alignment channel 52) which also retains the rail assembly 60 therein.

The rail assembly 60 in the depicted embodiment also includes features used to connect the filter cartridges 30 together. As described herein, one of the potential advantages of the dust collectors and filter cartridges described herein is the ability to connect the filter cartridges such that two or more filter cartridges on one of the tubesheets can be inserted into and removed from the dust collector for servicing from one side of the dust collector.

As depicted in, e.g., FIGS. 2, 4, and 7, the dust collectors may include two or more filter cartridges positioned over apertures that are located along one of the filter support bars 50 in the dust collector. Referring to FIG. 7, e.g., the apertures 26 are located on a common side of the first axis 51 on the lower wall 24 of the tubesheet. As a result, the filter cartridges 30 positioned over the apertures 26 are also located on a common side of the alignment channel 52 and aligned with each other along the alignment channel 52 in the filter support bar 50. This arrangement means that the rail assemblies 60 of all of the filter cartridges 30 can be inserted into the alignment channels 52 and advanced into the dust collector 10 from the same end of the alignment channel 52. In addition, because the rail assemblies 60 of the filter cartridges 30 located along the alignment channel 52 are connected to each other, removing the filter assemblies 30 is also facilitated because as a filter cartridge 30 is removed from the dust collector 10, the connected filter assemblies are drawn closer to the same end of the alignment channel 52 so that they can also be removed.

The rail assemblies 60 can be connected to each other in a variety of manners, although in one or more embodiments, the connection between adjacent rail assemblies may be in the form of a mechanical interlock. As seen in FIGS. 8-12, the depicted embodiment of rail assembly 60 includes a mechanical interlock in the form of a tab 65 and a slot 66. In particular, the tab 65 fits into slot 66 of the rail assembly 60 of an adjacent filter cartridge 30. Due to the restricted movement within the alignment channel 52, the tab 65 is retained in the slot 66 while the rail assemblies are located in the alignment slot 52.

Furthermore, movement of the rail assembly 60 of one filter cartridge 30 results in movement of the adjacent filter cartridge 30 - both movement out of the alignment channel 52 as filter cartridges 30 are being removed from the dust collectors described herein and movement into the alignment channel 52 as filter cartridges are being inserted into the dust collectors described herein.

In one or more examples, the connection between adjacent rail assemblies of adjacent filter cartridges may not only allow for withdrawal of the rail assemblies and their respective filter cartridges from one side of the dust collector, the connection may also retain a selected spacing between the filter cartridges 30 as the rail assemblies 60 and their respective filter cartridges 30 are being advanced into the dust collector. Maintaining selected spacing between the filter cartridges may facilitate proper positioning of the filter cartridges over the apertures in the tubesheet so that a seal can be created between the gaskets and the filter cartridges as described herein.

These functions of the connections between rail assemblies can be described in terms of tension and compression. In other words, in one or more examples, the connection between adjacent rail assemblies may provide for the delivery of tension forces such that a connected rail assembly can be pulled through an alignment channel using another rail assembly, but the connection may also be capable of delivering compressive forces as well, such that the connection can also be used to push a connected rail assembly into the alignment channel. It should be understood, however, that the delivery of compressive forces is option if, for example, spacer elements are provided on, e.g., the side panels of the filter cartridges themselves such that pushing one filter cartridge into the dust collector forces a spacer element into the adjacent filter cartridge so that proper spacing between the filter cartridges is maintained.

Although the mechanical interlocking structure of the depicted embodiment includes a tab and slot, many other alternative mechanical interlocking structures may be used, e.g., a hook and eye combination, etc. In one or more examples, the mechanical interlock connections between rail assemblies may be achieved without the use of tools.

In the depicted embodiment, two sets of opposing tabs 64 (i.e., tabs that extend in opposite directions along the Y-axis) are provided along rail 63. The sets of opposing tabs 64 are spaced apart from each other by a distance that is, e.g., greater than half the length of the rail 63 as measured along the X-axis. Spacing the sets of opposing tabs 64 farther apart may help to prevent the filter cartridge 30 from being tilted or twisted (relative to, e.g., the X-axis) such that the filter cartridge 30 is not properly oriented on the gasket that surrounds an aperture in the tubesheet.

Although the depicted embodiment includes two sets of opposing tabs 64, in one or more other examples, only one set of opposing tabs or three or more sets of opposing tabs may be provided. Although the opposing tabs 64 are located directly adjacent each other on the rail 63 along the X-axis in the depicted example, in one or more other embodiments, the tabs 64 that extend in opposing directions along the Y-axis may be spaced apart from each other by any suitable distance along the X-axis that is aligned with the length of the rail 63. Furthermore, the size of the tabs 64 may also vary. For example, in one or more examples, the length of the tabs in the X-direction (along the rail 63) may be larger or smaller than the length of the depicted tabs 64. For example, if only one set of opposing tabs is provided on a rail 63, one or both of the tabs may be longer (i.e., extend farther along the X-axis and the length of the rail 63) than the depicted tabs 64.

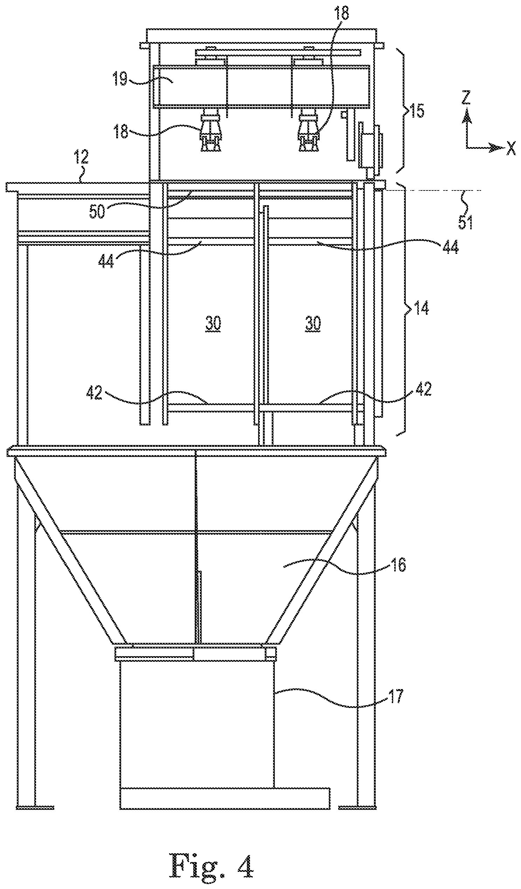

Further, although the depicted examples of the alignment channel 52 and the rail assembly 60 are both generally T-shaped, other shapes may be used in other embodiments. In particular, it may be advantageous if, in one or more examples, the alignment channel and the rail assembly are shaped such that the alignment channel allow movement of the rail assembly along the X-axis (i.e., along axis 51 as seen in, e.g., FIGS. 4, 5 and 7) while restricting movement of the rail assembly along a Y-axis and a Z-axis relative to the X-axis. Although the T-shaped alignment channel 52 and the complementary T-shaped rail assembly 60 accomplish those functions, alignment channels and complementary rail assemblies with other shapes may also.

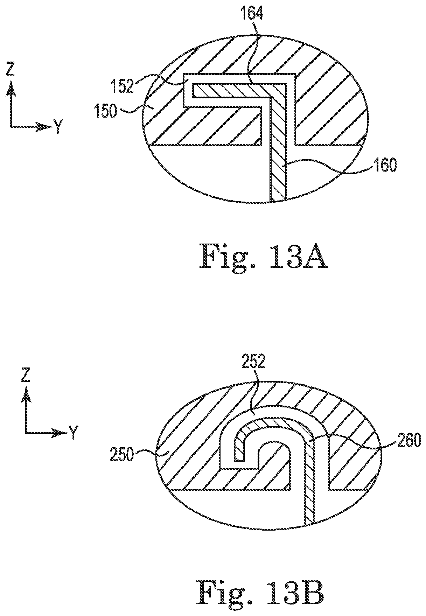

Some illustrative examples of alternative shapes are depicted in FIGS. 13A and 13B. A generally L-shaped alignment channel 152 in a filter support bar 150 is used in combination with a generally L-shaped rail assembly 160 in FIG. 13A, while a generally J-shaped alignment channel 252 in a filter support bar 250 is used in combination with a generally J-shaped rail assembly 260 in FIG. 13B. In both of these embodiments, the rail assembly 160/260 can move along the X-axis (which extends into and out of the page), while movement of the rail assemblies 160/260 along the Y-axis and the Z-axis is restricted by the alignment channels 152/252.

Illustrative embodiments of dust collectors and are discussed and reference has been made to possible variations. These and other variations and modifications in the invention will be apparent to those skilled in the art as long as they remain within the scope of the claims, it should be understood that this invention is not limited to the illustrative embodiments set forth herein.

## Claims

1. A dust collector (10) comprising:
a housing comprising a dirty air inlet (12) and a clean air outlet (13);
a tubesheet structure (20, 24) separating the housing between a dirty air plenum (14) and a clean air plenum (15), the tubesheet structure including an upper wall (20) and lower walls (24), the upper wall (20) including two apertures (22), the lower walls (24) extending downward into the volume occupied by the dirty air plenum (14), wherein the dirty air inlet is configured to allow dirty air into the dirty air plenum and the clean air outlet is configured to allow clean air out of the clean air plenum;
a plurality of apertures (26) formed through the lower walls of the tubesheet structure, wherein the plurality of apertures are configured to allow fluid flow from the dirty air plenum into the clean air plenum, wherein the plurality of apertures (26) comprises at least a first aperture and a second aperture;
a plurality of filter cartridges (30) located in the housing against the lower walls (24), wherein the plurality of filter cartridges are positioned over the plurality of apertures (26) in the lower walls of the tubesheet structure, and wherein the plurality of filter cartridges comprises at least a first filter cartridge positioned over the first aperture and a second filter cartridge positioned over the second aperture;
a first gasket positioned between a respective lower wall of the tubesheet structure and the first filter cartridge, wherein the first gasket is configured to form a seal between the respective lower wall of the tubesheet structure and the first filter cartridge such that air passing through the first aperture passes through the first filter cartridge;
a second gasket positioned between the respective lower wall of the tubesheet structure and the second filter cartridge, wherein the second gasket is configured to form a seal between the respective lower wall of the tubesheet structure and the second filter cartridge such that air passing through the second aperture passes through the second filter cartridge;
a filter cartridge frame structure (42, 44, 50) configured to retain the first filter cartridge over the first aperture and to retain the second filter cartridge over the second aperture, the filter cartridge frame structure further comprising an alignment channel (52) that extends along a first axis (51), wherein the first aperture and the second aperture are located on a common side of the first axis on the tubesheet structure;
a rail assembly (60) attached to each filter cartridge of the plurality of filter cartridges (30), wherein the rail assembly of the first filter cartridge and the rail assembly of the second filter cartridge both fit within the alignment channel (52) of the filter cartridge frame structure; and
a connection between the rail assembly of the first filter cartridge and the rail assembly of the second filter cartridge, the connection being configured such that withdrawal of the rail assembly of the first filter cartridge from the alignment channel (52) in a first direction moves the rail assembly of the second filter cartridge in the first direction within the alignment channel;
wherein the first gasket and the second gasket are both configured to assume an extended position and a retracted position;
wherein the first gasket and the second gasket both comprise a seal surface (27) that is positioned farther away from the tube sheet when the gasket (28) is in the extended position than when the gasket (28) is in the retracted position; and
wherein the gaskets can be extended to form a seal when the filter cartridges (30) are in position over the apertures in the tubesheet and can be retracted so that the filter cartridges (30) can slide through the dust collector (10) without the interference that the gaskets would provide if they were in their extended positions.

2. A dust collector (10) according to claim 1, wherein the rail assembly (60) of the first filter cartridge comprises a first end and a second end, wherein the rail assembly of the second filter cartridge comprises a first end and a second end, and wherein the connection comprises a mechanical interlock (65, 66) between the second end of the rail assembly of the first filter cartridge and the first end of the rail assembly of the second filter cartridge.

3. A dust collector (10) according to either of claims 1 and 2, wherein the connection between the rail assembly (60) of the first filter cartridge and the rail assembly of the second filter cartridge includes a mechanical interlock of the type of: a tab and slot, or a hook and eye.

4. A dust collector (10) according to any one of claims 1 to 3, wherein the alignment channel (52) comprises a T-shaped channel in a cross-section taken transverse to the first axis (51).

5. A dust collector (10) according to any one of claims 1 to 4, wherein the first filter cartridge and the second filter cartridge are suspended from the alignment channel (52) by their rail assemblies (60).

6. A dust collector according to any one of claims 1 to 5, wherein the first axis defines an X-axis, and wherein the alignment channel (52) restricts movement of the rail assemblies (60) along a Y-axis and a Z-axis relative to the X-axis.

7. A dust collector according to claim 1, wherein the first gasket and the second gasket comprise expandable gaskets.

8. A dust collector according to claim 7, wherein the expandable gaskets comprise inflatable gaskets.

9. A method of servicing the dust collector of claim 1, wherein the method comprises:
retracting the first gasket from an extended position to a retracted position before removing the first filter cartridge from the housing;
removing the first filter cartridge from the housing containing the first filter cartridge and the second filter cartridge (30), wherein the first filter cartridge and the second filter cartridge both comprise a rail assembly (60) located in an alignment channel (52) in the housing, and wherein removing the first filter cartridge comprises withdrawing the rail assembly of the first filter cartridge from the alignment channel in a first direction, wherein withdrawing the rail assembly of the first filter cartridge from the alignment channel moves the rail assembly of the second filter cartridge in the first direction;
disconnecting the rail assembly of the first filter cartridge from the rail assembly of the second filter cartridge;
retracting the second gasket (28) from an extended position to a retracted position before removing the second filter cartridge (30) from the housing;
removing the second filter cartridge from the housing by withdrawing the rail assembly of the second filter cartridge from the alignment channel in the first direction;
placing a third filter cartridge into the housing, wherein placing the third filter cartridge comprises inserting a rail assembly of the third filter cartridge into the alignment channel by moving the rail assembly a second direction that is opposite from the first direction;
placing a fourth filter cartridge into the housing, wherein placing the fourth filter cartridge comprises inserting a rail assembly of the fourth filter cartridge into the alignment channel; and
connecting the rail assembly of the fourth filter cartridge to the rail assembly of the third filter cartridge such that moving the rail assembly of the third filter cartridge in the alignment channel moves the rail assembly of the fourth filter cartridge within the alignment channel.

10. A method according to claim 9, wherein disconnecting the rail assembly of the first filter cartridge from the rail assembly of the second filter cartridge is performed after removing the rail assembly of the first filter cartridge from the alignment channel (52).

11. A method according to either of claims 9 and 10, wherein connecting the rail assembly of the fourth filter cartridge to the rail assembly of the third filter cartridge is performed before inserting the rail assembly of the fourth filter cartridge into the alignment channel (52).

12. A method according to any one of claims 9 to 11, wherein the alignment channel (52) extends along an X-axis, and wherein the alignment channel restricts movement of the rail assemblies (60) along a Y-axis and a Z-axis relative to the X-axis.

## Patentansprüche

1. Staubsammler (10), umfassend:
ein Gehäuse, welches einen Einlass (12) für verschmutzte Luft und einen Auslass (13) für saubere Luft umfasst;
eine Rohrplattenstruktur (20, 24), welche das Gehäuse zwischen einer Kammer (14) für verschmutzte Luft und einer Kammer (15) für saubere Luft trennt, wobei die Rohrplattenstruktur eine obere Wand (20) und untere Wände (24) umfasst, wobei die obere Wand (20) zwei Öffnungen (22) umfasst, wobei sich die unteren Wände (24) in das durch die Kammer (14) für verschmutzte Luft belegte Volumen nach unten erstrecken, wobei der Einlass für verschmutzte Luft dazu eingerichtet ist, verschmutzte Luft in die Kammer für verschmutzte Luft zu lassen, und der Auslass für saubere Luft dazu eingerichtet ist, saubere Luft aus der Kammer für saubere Luft zu lassen;
eine Mehrzahl von Öffnungen (26), welche durch die unteren Wände der Rohrplattenstruktur gebildet sind, wobei die Mehrzahl von Öffnungen dazu eingerichtet ist, einen Fluidstrom von der Kammer für verschmutzte Luft in die Kammer für saubere Luft zu lassen, wobei die Mehrzahl von Öffnungen (26) wenigstens eine erste Öffnung und eine zweite Öffnung umfasst;
eine Mehrzahl von Filtereinsätzen (30), welche in dem Gehäuse gegen die unteren Wände (24) angeordnet sind, wobei die Mehrzahl von Filtereinsätzen über der Mehrzahl von Öffnungen (26) in den unteren Wänden der Rohrplattenstruktur positioniert ist und wobei die Mehrzahl von Filtereinsätzen wenigstens einen ersten Filtereinsatz, welcher über der ersten Öffnung positioniert ist, und einen zweiten Filtereinsatz umfasst, welcher über der zweiten Öffnung positioniert ist;
eine erste Dichtung, welche zwischen einer jeweiligen unteren Wand der Rohrplattenstruktur und dem ersten Filtereinsatz positioniert ist, wobei die erste Dichtung dazu eingerichtet ist, eine Abdichtung zwischen der jeweiligen unteren Wand der Rohrplattenstruktur und dem ersten Filtereinsatz zu bilden, derart dass Luft, welche durch die erste Öffnung strömt, durch den ersten Filtereinsatz strömt;
eine zweite Dichtung, welche zwischen der jeweiligen unteren Wand der Rohrplattenstruktur und dem zweiten Filtereinsatz positioniert ist, wobei die zweite Dichtung dazu eingerichtet ist, eine Abdichtung zwischen der jeweiligen unteren Wand der Rohrplattenstruktur und dem zweiten Filtereinsatz zu bilden, derart dass Luft, welche durch die zweite Öffnung strömt, durch den zweiten Filtereinsatz strömt;
eine Filtereinsatzrahmenstruktur (42, 44, 50), welche dazu eingerichtet ist, den ersten Filtereinsatz über der ersten Öffnung zu halten und den zweiten Filtereinsatz über der zweiten Öffnung zu halten, wobei die Filtereinsatzrahmenstruktur ferner einen Ausrichtungskanal (52) umfasst, welcher sich entlang einer ersten Achse (51) erstreckt, wobei die erste Öffnung und die zweite Öffnung an einer gemeinsamen Seite der ersten Achse an der Rohrplattenstruktur angeordnet sind;
eine Schienenanordnung (60), welche an jedem Filtereinsatz der Mehrzahl von Filtereinsätzen (30) angebracht ist, wobei die Schienenanordnung des ersten Filtereinsatzes und die Schienenanordnung des zweiten Filtereinsatzes beide in den Ausrichtungskanal (52) der Filtereinsatzrahmenstruktur passen; und
eine Verbindung zwischen der Schienenanordnung des ersten Filtereinsatzes und der Schienenanordnung des zweiten Filtereinsatzes, wobei die Verbindung derart eingerichtet ist, dass eine Entnahme der Schienenanordnung des ersten Filtereinsatzes aus dem Ausrichtungskanal (52) in einer ersten Richtung die Schienenanordnung des zweiten Filtereinsatzes in der ersten Richtung in dem Ausrichtungskanal bewegt;
wobei die erste Dichtung und die zweite Dichtung beide dazu eingerichtet sind, eine ausgefahrene Position und eine eingezogene Position einzunehmen;
wobei die erste Dichtung und die zweite Dichtung beide eine Dichtfläche (27) umfassen, welche weiter von der Rohrplatte weg positioniert ist, wenn sich die Dichtung (28) in der ausgefahrenen Position befindet, als wenn sich die Dichtung (28) in der eingezogenen Position befindet; und
wobei die Dichtungen ausgefahren werden können, um eine Abdichtung zu bilden, wenn sich die Filtereinsätze (30) in einer Position über den Öffnungen in der Rohrplatte befinden, und eingezogen werden können, so dass die Filtereinsätze (30) ohne die Beeinträchtigung, für welche die Dichtungen sorgen würden, wenn sie sich in ihren ausgefahrenen Positionen befänden, durch den Staubsammler (10) gleiten können.

2. Staubsammler (10) nach Anspruch 1, wobei die Schienenanordnung (60) des ersten Filtereinsatzes ein erstes Ende und ein zweites Ende umfasst, wobei die Schienenanordnung des zweiten Filtereinsatzes ein erstes Ende und ein zweites Ende umfasst und wobei die Verbindung eine mechanische Verriegelung (65, 66) zwischen dem zweiten Ende der Schienenanordnung des ersten Filtereinsatzes und dem ersten Ende der Schienenanordnung des zweiten Filtereinsatzes umfasst.

3. Staubsammler (10) nach einem der Ansprüche 1 und 2, wobei die Verbindung zwischen der Schienenanordnung (60) des ersten Filtereinsatzes und der Schienenanordnung des zweiten Filtereinsatzes eine mechanische Verriegelung umfasst, des Typs: eine Lasche und ein Schlitz oder ein Haken und eine Öse.

4. Staubsammler (10) nach einem der Ansprüche 1 bis 3, wobei der Ausrichtungskanal (52) einen in einem zu der ersten Achse (51) transversalen Querschnitt T-förmigen Kanal umfasst.

5. Staubsammler (10) nach einem der Ansprüche 1 bis 4, wobei der erste Filtereinsatz und der zweite Filtereinsatz von dem Ausrichtungskanal (52) durch deren Schienenanordnungen (60) aufgehängt sind.

6. Staubsammler nach einem der Ansprüche 1 bis 5, wobei die erste Achse eine X-Achse definiert und wobei der Ausrichtungskanal (52) eine Bewegung der Schienenanordnungen (60) entlang einer Y-Achse und einer Z-Achse in Bezug auf die X-Achse beschränkt.

7. Staubsammler nach Anspruch 1, wobei die erste Dichtung und die zweite Dichtung ausdehnbare Dichtungen umfassen.

8. Staubsammler nach Anspruch 7, wobei die ausdehnbaren Dichtungen aufblasbare Dichtungen umfassen.

9. Verfahren zur Wartung des Staubsammlers nach Anspruch 1, wobei das Verfahren umfasst:
Einziehen der ersten Dichtung von einer ausgefahrenen Position in eine eingezogene Position vor einem Entfernen des ersten Filtereinsatzes von dem Gehäuse;
Entfernen des ersten Filtereinsatzes von dem Gehäuse, welches den ersten Filtereinsatz und den zweiten Filtereinsatz (30) enthält, wobei der erste Filtereinsatz und der zweite Filtereinsatz beide eine Schienenanordnung (60) umfassen, welche in einem Ausrichtungskanal (52) in dem Gehäuse angeordnet sind, und wobei das Entfernen des ersten Filtereinsatzes ein Entnehmen der Schienenanordnung des ersten Filtereinsatzes aus dem Ausrichtungskanal in einer ersten Richtung umfasst, wobei das Entnehmen der Schienenanordnung des ersten Filtereinsatzes aus dem Ausrichtungskanal die Schienenanordnung des zweiten Filtereinsatzes in der ersten Richtung bewegt;
Lösen der Schienenanordnung des ersten Filtereinsatzes von der Schienenanordnung des zweiten Filtereinsatzes;
Einziehen der zweiten Dichtung (28) von einer ausgefahrenen Position in eine eingezogene Position vor einem Entfernen des zweiten Filtereinsatzes (30) von dem Gehäuse;
Entfernen des zweiten Filtereinsatzes von dem Gehäuse durch ein Entnehmen der Schienenanordnung des zweiten Filtereinsatzes aus dem Ausrichtungskanal in der ersten Richtung;
Platzieren eines dritten Filtereinsatzes in dem Gehäuse, wobei das Platzieren des dritten Filtereinsatzes ein Einsetzen einer Schienenanordnung des dritten Filtereinsatzes in den Ausrichtungskanal durch ein Bewegen der Schienenanordnung in einer der ersten Richtung entgegengesetzten zweiten Richtung umfasst;
Platzieren eines vierten Filtereinsatzes in dem Gehäuse, wobei das Platzieren des vierten Filtereinsatzes ein Einsetzen einer Schienenanordnung des vierten Filtereinsatzes in den Ausrichtungskanal umfasst; und
Verbinden der Schienenanordnung des vierten Filtereinsatzes mit der Schienenanordnung des dritten Filtereinsatzes, derart dass ein Bewegen der Schienenanordnung des dritten Filtereinsatzes in dem Ausrichtungskanal die Schienenanordnung des vierten Filtereinsatzes in dem Ausrichtungskanal bewegt.

10. Verfahren nach Anspruch 9, wobei das Lösen der Schienenanordnung des ersten Filtereinsatzes von der Schienenanordnung des zweiten Filtereinsatzes nach dem Entfernen der Schienenanordnung des ersten Filtereinsatzes aus dem Ausrichtungskanal (52) durchgeführt wird.

11. Verfahren nach einem der Ansprüche 9 und 10, wobei das Verbinden der Schienenanordnung des vierten Filtereinsatzes mit der Schienenanordnung des dritten Filtereinsatzes vor dem Einsetzen der Schienenanordnung des vierten Filtereinsatzes in den Ausrichtungskanal (52) durchgeführt wird.

12. Verfahren nach einem der Ansprüche 9 bis 11, wobei sich der Ausrichtungskanal (52) entlang einer X-Achse erstreckt und wobei der Ausrichtungskanal eine Bewegung der Schienenanordnungen (60) entlang einer Y-Achse und einer Z-Achse in Bezug auf die X-Achse beschränkt.

## Revendications

1. Collecteur de poussière (10) comprenant :
un logement comprenant un orifice d'entrée d'air sale (12) et un orifice de sortie d'air propre (13) ;
une structure en feuille tubulaire (20, 24) séparant le logement entre un espace d'air sale (14) et un espace d'air propre (15), la structure en feuille tubulaire comprenant une paroi supérieure (20) et des parois inférieures (24), la paroi supérieure (20) comprenant deux ouvertures (22), les parois inférieures (24) s'étendant vers le bas dans le volume occupé par l'espace d'air sale (14), où l'orifice d'entrée d'air sale est configuré pour permettre à l'air sale d'entrer dans l'espace d'air sale et l'orifice de sortie d'air propre est configuré pour permettre de faire sortir l'air propre de l'espace d'air propre ;
une pluralité d'ouvertures (26) formée à travers les parois inférieures de la structure en feuille tubulaire, la pluralité des ouvertures étant configurée pour permettre au fluide de s'écouler depuis l'espace d'air sale dans l'espace d'air propre, la pluralité des ouvertures (26) comprenant au moins une première ouverture et une seconde ouverture ;
une pluralité de cartouches filtrantes (30) localisée dans le logement contre les parois inférieures (24), la pluralité des cartouches filtrantes étant positionnée sur la pluralité des ouvertures (26) dans les parois inférieures de la structure en feuille tubulaire, et où la pluralité des cartouches filtrantes comprend au moins une première cartouche filtrante positionnée sur la première ouverture et une seconde cartouche filtrante positionnée sur la seconde ouverture ;
un premier joint d'étanchéité positionné entre une paroi inférieure respective de la structure en feuille tubulaire et la première cartouche filtrante, où le premier joint d'étanchéité est configuré pour former un joint entre la paroi inférieure respective de la structure en feuille tubulaire et la première cartouche filtrante de sorte que l'air passant à travers la première ouverture passe à travers la première cartouche filtrante ;
un second joint d'étanchéité positionné entre la paroi inférieure respective de la structure en feuille tubulaire et la seconde cartouche filtrante, le second joint d'étanchéité étant configuré pour former un joint entre la paroi inférieure respective de la structure en feuille tubulaire et la seconde cartouche filtrante de sorte que l'air passant à travers la seconde ouverture passe à travers la seconde cartouche filtrante ;
une structure cadre de cartouche filtrante (42, 44, 50) configurée pour retenir la première cartouche filtrante sur la première ouverture et pour retenir la seconde cartouche filtrante sur la seconde ouverture, la structure cadre de cartouche filtrante comprenant en outre un canal d'alignement (52) qui s'étend le long d'un premier axe (51), où la première ouverture et la seconde ouverture sont localisées sur un côté commun du premier axe sur la structure en feuille tubulaire ;
un ensemble rail (60) fixé à chaque cartouche filtrante de la pluralité des cartouches filtrantes (30), où l'ensemble rail de la première cartouche filtrante et l'ensemble rail de la seconde cartouche filtrante s'ajustent tous les deux à l'intérieur du canal d'alignement (52) de la structure cadre de cartouche filtrante ; et
une connexion entre l'ensemble rail de la première cartouche filtrante et l'ensemble rail de la seconde cartouche filtrante, la connexion étant configurée de sorte que le retrait de l'ensemble rail de la première cartouche filtrante du canal d'alignement (52) dans un premier sens déplace l'ensemble rail de la seconde cartouche filtrante dans le premier sens à l'intérieur du canal d'alignement ;
où le premier joint d'étanchéité et le second joint d'étanchéité sont tous deux configurés pour prendre en charge une position déployée et une position rétractée ;
où le premier joint d'étanchéité et le second joint d'étanchéité comprennent tous les deux une surface d'étanchéité (27) qui est positionnée plus loin de la feuille tubulaire lorsque le joint d'étanchéité (28) se trouve dans la position déployée que lorsque le joint d'étanchéité (28) se trouve dans la position rétractée ; et
où les joints d'étanchéité peuvent être déployés pour former un joint lorsque les cartouches filtrantes (30) se trouvent en position sur les ouvertures dans la feuille tubulaire et peuvent être rétractés de sorte que les cartouches filtrantes (30) peuvent coulisser à travers le collecteur de poussière (10) sans l'interférence que les joints d'étanchéité fourniraient s'ils se trouvaient dans leurs positions déployées.

2. Collecteur de poussière (10) selon la revendication 1, dans lequel l'ensemble rail (60) de la première cartouche filtrante comprend une première extrémité et une seconde extrémité, où l'ensemble rail de la seconde cartouche filtrante comprend une première extrémité et une seconde extrémité, et où la connexion comprend un interverrouillage mécanique (65, 66) entre la seconde extrémité de l'ensemble rail de la première cartouche filtrante et la première extrémité de l'ensemble rail de la seconde cartouche filtrante.

3. Collecteur de poussière (10) selon l'une ou l'autre des revendications 1 et 2, dans lequel la connexion entre l'ensemble rail (60) de la première cartouche filtrante et l'ensemble rail de la seconde cartouche filtrante comprend un interverrouillage mécanique du type de : une patte et une fente, ou un crochet et un œil.

4. Collecteur de poussière (10) selon l'une quelconque des revendications 1 à 3, dans lequel le canal d'alignement (52) comprend un canal en forme de T dans une coupe transversale prise transversalement au premier axe (51).

5. Collecteur de poussière (10) selon l'une quelconque des revendications 1 à 4, dans lequel la première cartouche filtrante et la seconde cartouche filtrante sont suspendues depuis le canal d'alignement (52) par leurs ensembles rails (60).

6. Collecteur de poussière selon l'une quelconque des revendications 1 à 5, dans lequel le premier axe définit un axe X, et dans lequel le canal d'alignement (52) restreint le mouvement des ensembles rails (60) le long d'un axe Y et d'un axe Z par rapport à l'axe X.

7. Collecteur de poussière selon la revendication 1, dans lequel le premier joint d'étanchéité et le second joint d'étanchéité comprennent des joints d'étanchéité extensibles.

8. Collecteur de poussière selon la revendication 7, dans lequel les joints d'étanchéité extensibles comprennent des joints d'étanchéité gonflables.

9. Procédé de mise en service du collecteur de poussière selon la revendication 1, dans lequel le procédé comprend :
la rétractation du premier joint d'étanchéité depuis une position déployée vers une position rétractée avant de retirer la première cartouche filtrante du logement ;
le retrait de la première cartouche filtrante du logement contenant la première cartouche filtrante et la seconde cartouche filtrante (30), où la première cartouche filtrante et la seconde cartouche filtrante comprennent toutes les deux un ensemble rail (60) localisé dans un canal d'alignement (52) dans le logement, et où le retrait de la première cartouche filtrante comprend le retrait de l'ensemble rail de la première cartouche filtrante du canal d'alignement dans un premier sens, où le retrait de l'ensemble rail de la première cartouche filtrante depuis le canal d'alignement déplace l'ensemble rail de la seconde cartouche filtrante dans le premier sens ;
la déconnexion de l'ensemble rail de la première cartouche filtrante depuis l'ensemble rail de la seconde cartouche filtrante ;
la rétractation du second joint d'étanchéité (28) depuis une position déployée vers une position rétractée avant de retirer la seconde cartouche filtrante (30) du logement ;
le retrait de la seconde cartouche filtrante du logement par retrait de l'ensemble rail de la seconde cartouche filtrante depuis le canal d'alignement dans le premier sens ;
la mise en place d'une troisième cartouche filtrante dans le logement, où la mise en place de la troisième cartouche filtrante comprend l'insertion d'un ensemble rail de la troisième cartouche filtrante dans le canal d'alignement en déplaçant l'ensemble rail selon un second sens qui est opposé au premier sens ;
la mise en place d'une quatrième cartouche filtrante dans le logement, où la mise en place de la quatrième cartouche filtrante comprend l'insertion d'un ensemble rail de la quatrième cartouche filtrante dans le canal d'alignement ; et
la connexion de l'ensemble rail de la quatrième cartouche filtrante à l'ensemble rail de la troisième cartouche filtrante de sorte que le déplacement de l'ensemble rail de la troisième cartouche filtrante dans le canal d'alignement déplace l'ensemble rail de la quatrième cartouche filtrante à l'intérieur du canal d'alignement.

10. Procédé selon la revendication 9, dans lequel la déconnexion de l'ensemble rail de la première cartouche filtrante depuis l'ensemble rail de la seconde cartouche filtrante est effectuée après le retrait de l'ensemble rail de la première cartouche filtrante depuis le canal d'alignement (52).

11. Procédé selon l'une ou l'autre des revendications 9 et 10, dans lequel la connexion de l'ensemble rail de la quatrième cartouche filtrante à l'ensemble rail de la troisième cartouche filtrante est effectuée avant l'insertion de l'ensemble rail de la quatrième cartouche filtrante dans le canal d'alignement (52).

12. Procédé selon l'une quelconque des revendications 9 à 11, dans lequel le canal d'alignement (52) s'étend le long d'un axe X, et dans lequel le canal d'alignement restreint le mouvement des ensembles rails (60) le long d'un axe Y et d'un axe Z par rapport à l'axe X.
